# EUROPEAN PATENT SPECIFICATION

(11) **EP 1 601 462 B1**
(45) Date of publication and mention of the grant of the patent: **24.04.2013**
(21) Application number: 04719515.1
(22) Date of filing: 11.03.2004
(51) Int. Cl.: G01N 31/22

(54) **PRODUCT FOR DETECTING A PHOTOCATALYST**
PRODUKT ZUR ERFASSUNG EINES PHOTOKATALYSATORS
PRODUIT POUR DETECTER UN PHOTO-CATALYSEUR

(30) Priority: 12.03.2003 GB 0305602
(43) Date of publication of application: 07.12.2005
(73) Proprietor: University of Strathclyde, Glasgow G1 1XQ (GB)
(72) Inventor: MILLS, Andrew, Glasgow G20 8QZ (GB); Dr Soo K. Lee Daegu Gyeongbuk (DGIST), Duksan-Dong, Jung-Ku, Daegu 700-742 (KR)
(74) Representative: Chapman, Paul Gilmour
(86) International application number: PCT/GB2004/001024
(87) International publication number: WO 2004/080595

(56) References cited:
- EP-B- 0 756 704
- PATENT ABSTRACTS OF JAPAN vol. 2002, no. 12, 12 December 2002 (2002-12-12) & JP 2002 228589 A (JAPAN ATOM ENERGY RES INST), 14 August 2002 (2002-08-14)
- KOUSHITA K ET AL: "EVALUATION OF PHOTOCATALYTIC ACTIVITY BY DYE DECOMPOSITION" JOURNAL OF SOL-GEL SCIENCE AND TECHNOLOGY, KLUWER ACADEMIC PUBLISHERS, DORDRECHT, NL, vol. 22, no. 1/2, September 2001 (2001-09), pages 91-98, XP001100710 ISSN: 0928-0707
- PATENT ABSTRACTS OF JAPAN vol. 003, no. 026 (E-095), 6 March 1979 (1979-03-06) & JP 54 005422 A (FUJI PHOTO FILM CO LTD), 16 January 1979 (1979-01-16) -& DATABASE WPI Section Ch, Week 197908 Derwent Publications Ltd., London, GB; Class E19, AN 1979-14749B XP002288128
- PATENT ABSTRACTS OF JAPAN vol. 2000, no. 11, 3 January 2001 (2001-01-03) & JP 2000 214155 A (TOPPAN PRINTING CO LTD), 4 August 2000 (2000-08-04)
- PATENT ABSTRACTS OF JAPAN vol. 008, no. 165 (P-291), 31 July 1984 (1984-07-31) & JP 59 061778 A (TOPPAN INSATSU KK), 9 April 1984 (1984-04-09)
- PATENT ABSTRACTS OF JAPAN vol. 011, no. 186 (P-586), 16 June 1987 (1987-06-16) & JP 62 012853 A (MISHIMA SEISHI KK), 21 January 1987 (1987-01-21)

## Description

### Field of the Invention

This invention relates to an indicator for detecting a photocatalyst wherein the indicator comprises at least one redox-sensitive material and either at least one electron donor or at least one electron acceptor. The invention also relates to a method for detecting a photocatalyst using an indicator. In particular, the photocatalyst may be a semiconductor such as titanium dioxide on a glass substrate.

### Background of the Invention

Semiconductor photocatalysts, such as titanium dioxide, are finding increasing use as sensitisers for the purification of water and air. Indeed, in recent years the semiconductor, titanium dioxide has attracted attention as an ideal photocatalytic material for destroying a vast array of organic compounds, including haloalkanes, aromatics, alkanes, insecticides, pesticides and surfactants. Titanium dioxide is an attractive semiconductor photocatalyst because it is cheap, easy to make, very photocatalytically active and biologically and chemically inert. In addition, titanium dioxide can be generated in the form of a nanocrystalline film that is non-light scattering and therefore almost invisible to the eye when cast onto an inert substrate such as a silicon, ceramic, metal or glass. Titanium dioxide also has the attractive feature of exhibiting photoinduced super-hydrophilicity in which ultra-bandgap radiation of a titania film not only activates a surface for photocatalytic destruction of any organics but also changes the nature of a surface so that it is more hydrophilic on exposure to UV-light. This increase in hydrophilicity is not permanent and the titanium dioxide reverts back to its original, more hydrophobic form, when left in the dark for a period of hours. Due to the increase in hydrophilicity, water droplets are less likely to form on the surface of a UV-activated titania film therefore allowing the water to run off.

The combination of photoinduced super-hydrophilicity and photocatalytic activity has attracted many glass manufacturing companies to consider using titania as a coating on glass to form a light-activated self-cleaning glass. Such light-activated self-cleaning glass is not only less likely to become dirty due to photoinduced super-hydrophilicity but also is much less likely to mist up, or fog up, compared to non-coated float glass. Titania coated glass is also less likely to allow dirt-containing water droplets to reside on its surface but instead, due to the photoinduced super-hydrophilicity, will encourage the droplets to run off. As a consequence a number of major glass manufacturers have started selling self-cleaning glass products for general use in the construction industry. In almost all cases the self-cleaning glass product comprises as an active ingredient, a thin nanocrystalline film of titania (i.e. titanium dioxide) which acts as a photocatalyst for the mineralisation of organic impurities deposited onto the surface of a glass by oxygen in the air. The semiconductor titanium dioxide is the preferred coating material because it is cheap, chemically and biologically inert, mechanically robust and very photoactive. One of the major problems of using nanocrystalline semiconductor photocatalyst materials, particularly in film form, is that the nonocrystalline particles are often invisible to the eye. As a consequence, it can be difficult to decide which side of the glass or inert substrate, has the photocatalyst coating on it. Titania coated glass is discussed in, for example, WO 00/75087, WO 02/18287 and EP 1254870 which are incorporated herein by reference.

Titanium dioxide only absorbs UV light and has a bandgap energy of ≥ 3.0 eV. Sunlight only contains a small amount of UV light (ca. 3%) which results in most titania self-cleaning glasses working slowly, making it hard to demonstrate their efficacy. There is therefore a real need for a photocatalyst indicator to determine the location of the titantium dioxide coating.

In PCT/GB2002/003994 (unpublished) an oxygen sensor was proposed comprising a semiconductor photocatalyst such as titanium dioxide, a redox-sensitive dye and a sacrificial electron donor. UV activation of the semiconductor photocatalyst resulted in the irreversible oxidation of the sacrificial electron donor and concomitant reduction of the redox dye. Redox dyes change colour or fluorescence intensity when reduced or oxidised. Thus, in the oxygen sensor in PCT/GB2002/003994 reduction by the semiconductor photocatalyst causes the dye to change colour or fluorescence intensity. The oxygen sensor was selected so that the reduced form of the dye was sensitive towards oxygen and thus easily oxidised by oxygen to its original coloured form. In the absence of oxygen, the oxygen sensor once activated with ultra-bandgap light, would remain in its reduced usually non-coloured form, until allowed to react with oxygen and return to its original colour and/or fluorescence intensity. In contrast, the invention as described in the present application describes an indicator which does not contain a semiconductor photocatalyst but instead indicates the presence of a photocatalyst which may be a semiconductor.

It is an object of at least one aspect of the present invention to obviate or mitigate at least one of the aforementioned problems.

It is a further object of the present invention to provide an indicator for detecting the presence of a photocatalyst material.

### Summary of the Invention

According to a first aspect of the present invention there is provided an indicator system obtainable by the steps of:
dissolving at least one redox sensitive material, which displays different physical properties in the oxidised and reduced forms and is capable of becoming irreversibly reduced and changing colour and/or luminescence light intensity and at least one sacrificial electron donor in a solvent to form an ink;
applying the ink onto a photocatalyst semiconductor material;
and drying the ink to form a thin dry surface on the photocatalyst semiconductor material.

For indicators that operate via a reductive electron transfer mechanism there must be at least one electron donor.

In an indicator that operates via a reductive mechanism, the light used for irradiating the photocatalyst material, although not wishing to be bound by theory, is thought to electronically excite the photocatalyst material. Thereafter an electron is then donated by the electron donor to the photocatalyst material which in turn provides an electron to the redox-sensitive material causing the redox sensitive material to become reduced, and therefore change colour and/or luminescence light intensity.

Typically, the light used for irradiating the photocatalyst material may, for example, have a wavelength in the region of less than 1000nm. Preferably, the light has a wavelength of 200-1000nm, 300-700nm or more preferably less than or equal to 420nm.

The indicator may be activated by light of energy greater than or equal to the bandgap energy of the photocatalyst material. The indicator may therefore be considered to be light activated by the photocatalyst material. If no photocatalyst material is present, the indicator will not change colour or its luminescent light intensity when irradiated with said light.

On irradiation of the light, the photocatalyst material may become electronically excited i.e. activated under ultra bandgap irradiation conditions. The electronically excited state of the photocatalyst material is a better oxidising agent than its non-excited, ground state form. In the case of an indicator that operates via a reductive mechanism the electronically excited photocatalyst material is able to oxidise the electron donor present in the indicator. The electron donor may be chosen so that this process is irreversible i.e. the electron donor is sacrificed and the oxidation of the electron donor itself is not associated with any change in colour or fluorescence intensity of the photocatalyst material. The photoinduced electron transfer reaction may comprise the formation of the irreversible oxidised form of the sacrificial electron donor and the reduced form of the photocatalyst material. The reduced form of the photocatalyst material may then reduce the redox-sensitive material in the indicator to its reduced form. The reduced form of the redox-sensitive material may typically be a different colour and/or fluorescence intensity compared to its original oxidised form.

In the case of a photocatalyst indicator that operates via a reductive mechanism the redox sensitive material may be chosen to that its reduced form is sensitive towards oxygen, or insensitive towards oxygen. In the case of a redox sensitive material being sensitive towards oxygen then, under normal aerobic conditions, the light activation step may cause the reduction of the redox sensitive material to its less coloured (and/or less fluorescent) oxygen sensitive material. However, since oxygen is present (there is 21% oxygen in air) then following the light activation and the changing colour of the redox sensitive material, the redox sensitive material may return (usually slowly) to its original (usually highly coloured) form as it is oxidised by the oxygen in air.

In the case of a photocatalyst indicator that operates via a reductive mechanism and where the redox sensitive material, in its reduced form, is substantially insensitive towards oxygen, then following the light activation step and the conversion of the redox sensitive material from its usually highly coloured form to its less coloured, or differently coloured form, there may be no subsequent change in colour due to air oxidation, i.e. the photoinduced colour change in the redox sensitive material is irreversible. In the overall light activation process the photocatalytic material may return to its original state, ready to absorb another photon of light greater than or equal to the energy of the bandgap of the photocatalytic material and begin the process of electron transfer from the electron donor to the redox sensitive material again, until substantially all the redox-sensitive material has been converted into its reduced form.

As a consequence, the photocatalyst material is usually referred to as a photocatalyst, or photosensitiser, i.e. a material that absorbs light and then affects the change, but is itself left unchanged at the end of the process. The photocatalyst may be a semiconductor, such as titanium dioxide.

The indicators may therefore be based on a reductive mechanism. An indicator that operates via a reductive mechanism may use a light activation step that turns the redox material from its initially usually coloured (and/or non fluorescent) form into a reduced form which may have a different colour and/or fluorescence intensity.

Exposure of an indicator, coated onto the surface of an appropriate photocatalyst, to light of greater than or equal to the bandgap of the photocatalyst may therefore result in the redox-sensitive material changing in colour and/or fluorescence intensity as it is changed from its original oxidised form to its reduced (usually non-coloured and/or fluorescent) form. The reduction of the redox-sensitive material may be the photocatalyst indicating step, as it may result in a substantially observable optical (i.e. coloured and/or fluorescent) change in the indicator upon irradiation of the underlying photocatalyst. Similarly, in the case of a photocatalyst indicator that operates via an oxidative mechanism it may be the light activation step that turns the redox indicator present in the indicator from its initially usually coloured (and/or non-fluorescent) form into an oxidised form which has a different colour and/or fluorescence intensity. In this case the redox indicator may usually be substantially insensitive towards oxygen. In such indicators, exposure of the combination of the photocatalyst indicator, coated onto the surface of an appropriate photocatalyst, to light of greater than or equal to the bandgap of the photocatalyst may result in the redox indicator changing in colour and/or fluorescent intensity as it is changed from its original reduced form to its oxidised (usually non-coloured and/or fluorescent) form. This latter step is also the photocatalyst indicating step, as it may result in a clear optical (coloured and/or fluorescent) change in the indicator formulation upon irradiation of the underlying photocatalyst.

For the photocatalytic reaction to occur, and the associated colour and/or luminescent change in the redox-sensitive material, the components of the indicator may be brought into substantially intimate contact with the photocatalytic material. The indicator may therefore take the form of, for example, an ink containing the basic components of the indicator. The indicator which detects the photocatalyst material may initially be made up in a liquid form. Typically, the indicator prior to application is in the form of a liquid ink. The indicator may be substantially or at least partially dissolved in a solvent such as water, methanol, ethanol or mixtures thereof and may then be brought into contact with a photocatalyst. The photocatalyst may, for example, be a coating on a substrate, such as glass. The indicator may dry to form a thin dry surface on the photocatalyst material. The indicator in the form of an ink may dry into a highly coloured stain, or label, on the surface of the photocatalytic material.

The indicator may also be printed onto a photocatalyst material in various shapes, text, emblems or logos.

For a photocatalyst indicator that operates via a reductive mechanism, the intimate contact of the various components of the photocatalyst indicator may allow the redox sensitive material to undergo a redox reaction wherein there may be a transfer of electrons from the photogenerated reduced form of the semiconductor material to the redox sensitive material.

Typically, the redox sensitive material may be, for example, a dye such as: a thiazine dyestuff, oxazene dyestuff, oxazone dyestuff, tetrazolium dyestuff, triarlymethane dyestuff, azine dyestuff, azo dyestuff, trihalomethane dyestuff, indophenol dyestuff and indigo dyestuff, viologen and/or mixtures thereof.

For a photocatalyst indicator that operates via a reductive mechanism the electron donor may have the ability to donate electrons, preferably and usually irreversibly. Typically, the electron donor may be a mild reducing agent. The electron donor may, for example, be an amine (e.g. NaEDTA or TEOA), a reducing saccharide (such as glucose or fructose), readily oxidisable polymers (such as polyvinyl alcohol), and other general anti-oxidants (such as ascorbic and citric acid), or easily oxidisable materials such as glycerol and/or mixtures thereof. The photocatalyst material under test may have the ability to form an excited electronic state that is sufficiently oxidising to oxidise the sacrificial electron donor to a reduced form that may be able to reduce the redox sensitive material.

Typically, the photocatalyst material may be a semiconductor. By semiconductor material is meant materials which are usually solids which may have an electronic structure comprising a nearly filled valence band and a nearly empty conductance band. The difference in energy between these two levels is called the bandgap of the semiconductor. A semiconductor material has a bandgap that may typically lie in the range of about 0.1 - 4eV and exhibits a degree of conductivity that is usually less than that of metals which have bandgaps less than about 0.1eV but greater than that of insulators which have bandgaps usually greater than about 4eV. The conductivity of the semiconductor material may increase with increasing temperature. The semiconductor may be classed as a photosensitiser or a photocatalyst i.e. a material that is able to promote a process through the creation of an electronically excited state generated by the absorption of a photon of light of appropriate energy. Typically, the energy of the light may be usually greater than or equal to the bandgap of the photocatalyst i.e. it is sufficient to excite the photocatalyst electronically. The initial excitation of the system is followed by subsequent electron transfer and/or energy transfer which results in overall photosensitised or photocatalysed reactions. In a photosensitised or photocatalysed reaction, the photocatalyst or photosensitiser remains substantially chemically unchanged at the end of the overall reaction.

The photocatalyst material may, for example, be an oxide of titanium (e.g. titanium (IV) oxide; TiO₂ and strontium titanate i.e. SrTiO₃), an oxide of tin (e.g tin (IV) oxide; and SnO₂), an oxide of tungsten (such as tungsten (VI) oxide; and WO₃), an oxide of zinc (e.g. zinc (II) oxide; and ZnO) and mixtures thereof. Suitable titanium oxide coatings are disclosed in EP 0901991, WO 97/07069, WO 97/10186 and WO 98/41480, which are incorporated herein by reference. The photocatalyst material may also be a metal chalcogenide such as, for example, cadmium oxide, cadmium sulfide, cadmium selanide and cadmium telluride. The chalcogenides of zinc and mercury are also semiconductor photocatalysts and may be used in the present invention. The photocatalyst material may also be a doped version of a metal oxide such as, for example, nitrogen doped titanium (IV) oxide which effectively has a slightly lower bandgap than titanium dioxide. In particular, the photocatalyst material may be the titanium oxide coated glass manufactured by Pilkington plc and sold as Pilkington Activ (Registered Trade Mark) Pittsburgh Plate Glass Company (PPG) and sold as Sun Clean (Registered Trade Mark) and AFG and sold as Radiance-Ti (Registered Trade Mark).

The photocatalyst material may, for example, be in the form of a thin nanocrystalline film coated on an inert substrate such as glass, ceramic, metal or inert polymeric material such as silica coated silicon. The photocatalyst material may have a thickness of 15nm. WO 00/75087, WO 02/18287 and EP 1254870, which are incorporated herein by reference, all relate to titanium oxide coated glass wherein the coated glass has the characteristic of hydrophilic self-cleaning and may be suitable for use in the present invention. The photocatalyst may also be in the form of, for example, a powder in nanocrystalline or microcrystalline form. The semiconductor material may, for example, be a large single crystal.

Typically, the indicator, in its non-activated form, may be stable over many months under ambient atmospheric conditions. A typical indicator may continue to work as a sensor for over one year when stored under ambient conditions in the dark. A typical photocatalyst indicator film once cast onto a material in question, may be readily removed using an appropriate solvent.

The indicator may further comprise a binder which binds the components of the photocatalyst indicator together. The binder may, for example, be a polymeric material such as gelatin, hydroxyethyl, cellulose (HEC), polyvinyl alcohol (PVA), ethyl cellulose (EC), cellulose acetate (CEA), polypyrolidone (PVP), polyethylene oxide and polymethylmethacrylate (PMMA).

Typically, the weight ratios for the composition of the redox sensitive material:electron donor:electron acceptor:binder and solvent may be about 0.001 to 0.1:0.05 to 4.0:0.01 to 1.0:1 to 10. Preferably, the ratio may be about 0.005 to 0.05:0.1 to 1.0:0.05 to 0.5: 3 to 6, or more preferably 0.01:0.4:0.1:4. The overall mass of the indicator ink may be about 1.0 to 10.0g or preferably about 4.5g. In the preparation of the indicator ink the redox sensitive material, electron donor, binder and solvent are simply mixed together to produce a photocatalyst indicator ink which is then ready for casting.

According to a second aspect of the present invention there is provided a method of detecting a photocatalyst material coated on a substrate comprising the steps of: coating an indicator on the substrate, the indicator comprising at least one redox-sensitive material which displays different physical properties in the oxidised and reduced forms; and at least one sacrificial electron donor;
wherein the at least one redox sensitive material and the at least one electron donor are substantially in contact with one another;
irradiating the substrate with light of greater than or equal to the energy necessary to electronically excite any photocatalyst material which may be present on the substrate, such that the indicator becomes irreversibly reduced and changes colour and/or luminescent light intensity, when in contact with the photocatalyst material; and detecting any change in colour and/or luminescent light intensity.

In the case of a photocatalyst indicator that operates via a reductive mechanism, the indicator may comprise at least one electron donor. By irradiating the underlying photocatalyst under test with light of energy greater than or equal to its bandgap, the redox material in the indicator may be converted into its reduced form, which may be stable under oxidising or non-oxidising conditions, and even if unstable under oxidising conditions such as found in air, only reacts sufficiently slowly with the oxygen present to make the initial, light-induced, optical change apparent. The colour change that indicates the presence of a photocatalyst may therefore be clear to see after the ultra-bandgap irradiation step i.e. the photocatalyst indicator step and before the form of the redox material is reacted back to its original oxidised form by the oxygen present in air. If the reduced form of the redox indicator is stable in air, then the ultra-bandgap irradiation step may produce a permanent colour change in the redox sensitive material.

Typically, the photocatalyst to be detected may be titanium dioxide and, since titanium dioxide has a large bandgap, near ultra violet light (i.e. 300-420nm) may be used. The light activated redox indicator once exposed to an oxidising agent may return back to its original colour and/or fluorescence intensity if it is sensitive towards oxygen. Conveniently, the change in colour associated with the light activation step may be irreversible and so persist indefinitely under either oxidising and/or non-oxidising conditions provided the indicator is not over-exposed to ultra bandgap light during the light activation step. This irreversible change in colour may be achieved using a redox indicator material that is reduced irreversibly to its reduced form, which is of a different colour and/or fluorescence intensity to its original oxidised form.

Typically, the kinetics of the light activation step may be insensitive towards the level of water or carbon dioxide or nitrogen in the ambient atmosphere.

If the photocatalyst material is only coated to one side of the glass the indicator may not only identify the presence of the photocatalyst material but also which side of the glass is coated. This is important as the side of the glass coated with a photocatalyst material such as titanium dioxide, should usually be installed in a window so that it faces outwards and is exposed to the weather. To facilitate the determination of which side of the glass is coated, writing may be used. If the writing can be read properly, the side of the glass nearest to a person making the determination is the coated side. If the writing is in a mirror-image form, the side of the glass furthest from a person making the determination is the coated side.

The method may also be used to ensure that photocatalyst material adhered to a glass surface is still present and active many years after the glass has been installed. The photocatalyst material may, for example, be Pilkington Activ (Registered Trade Mark).

A measure of the photocatalytic activity of the underlying photocatalyst may then be provided by monitoring, spectrophotometrically, by eye or otherwise, the degree of colour change the indicator film undergoes upon irradiation with a light source of known ultra-bandgap intensity. The higher the photocatalytic activity of the underlying photocatalyst the more rapid the measured, or observed, change in colour of the indicating film. The rate of change of the colour and/or fluorescence intensity of the indicating film may be used to provide a quantitative indication of the photocatalytic activity of the underlying photocatalyst under test.

### Brief Description of the Drawings

Embodiments of the present invention will now be described, by way of example only, with reference to the accompanying drawings in which:

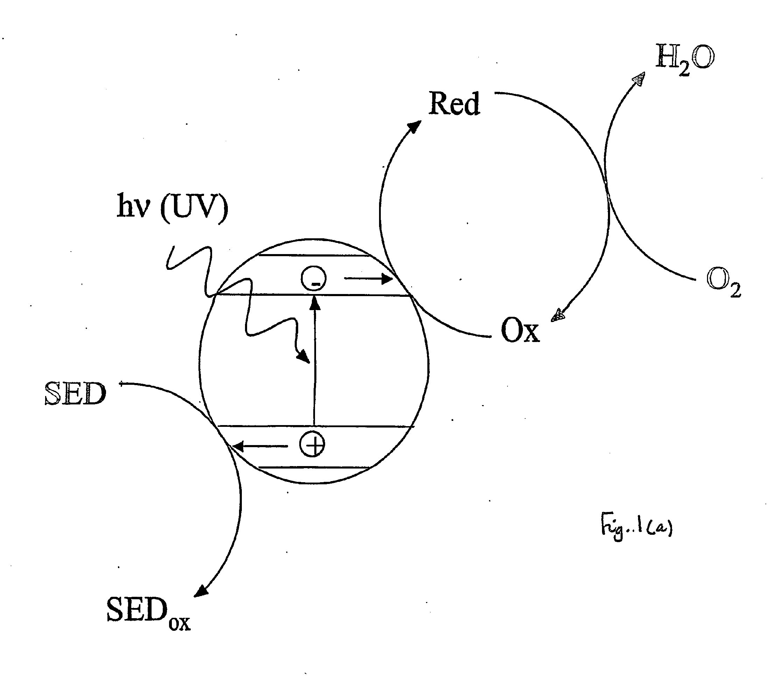

Figure 1(a) is an overall reaction for a photocatalyst indicator which operates via a reductive mechanism in which the redox-sensitive material is not sensitive towards oxygen in its oxidised form but is sensitive towards oxygen in its reduced form;

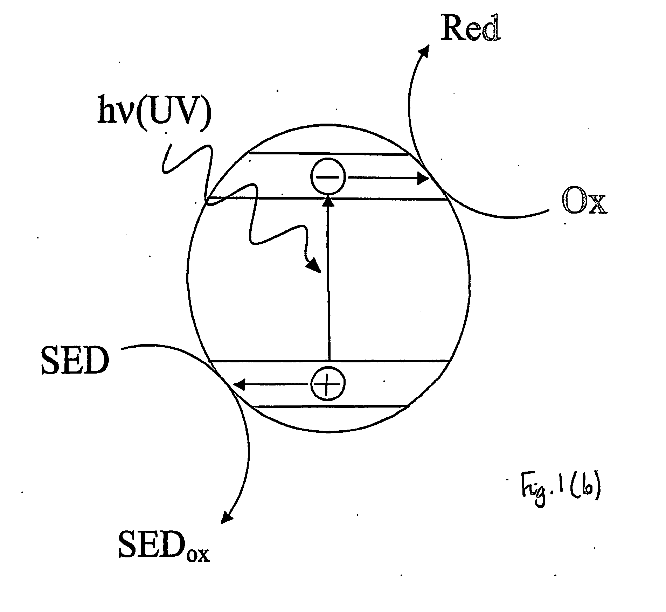

Figure 1(b) is an overall reaction scheme for a photocatalyst indicator which operates via a reductive mechanism in which the redox-sensitive material is not sensitive towards oxygen in either its reduced or oxidised form (i.e. the indicator is irreversible);

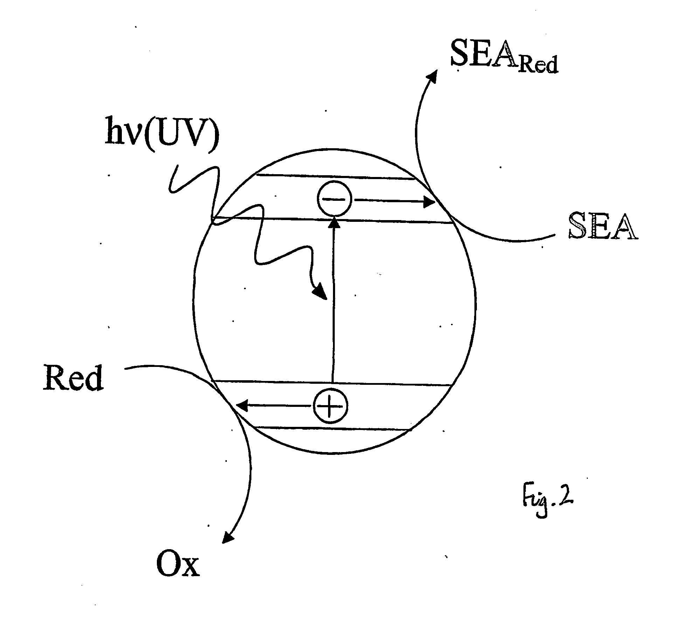

Figure 2 is an overall reaction scheme for a photocatalyst indicator which operates via an oxidative mechanism in which the redox sensitive material is not sensitive towards oxygen in either its reduced or oxidised form (i.e. the indicator is irreversible);

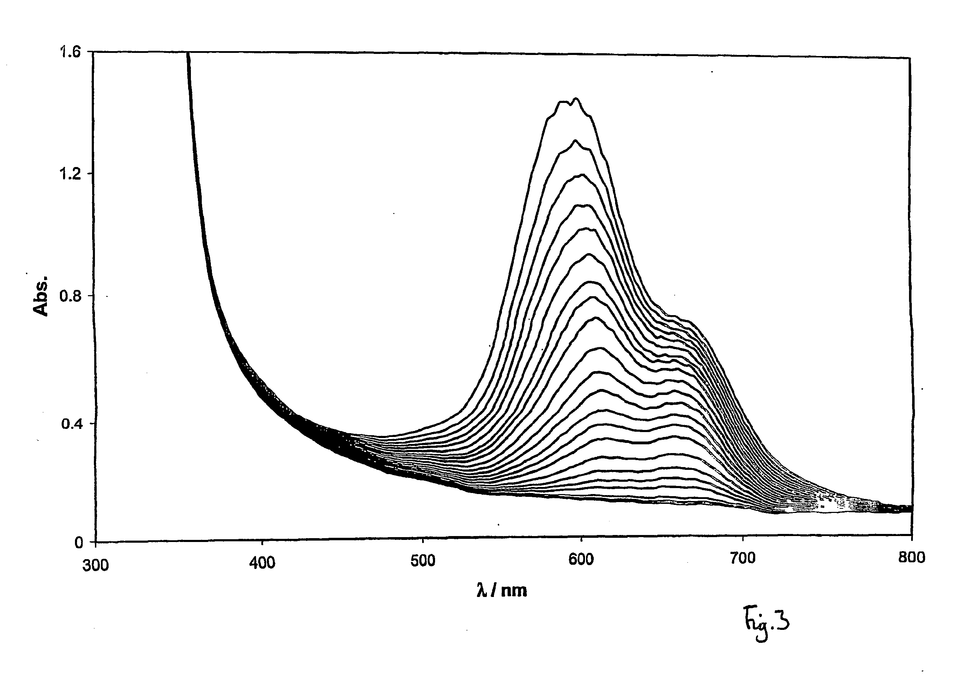

Figure 3 relates to changes in UV-visible absorption spectra upon irradiation of the redox indicator material methylene blue, and the sacrificial electron donor glycerol in hydroxyethylcellulose coated onto a nanocrystalline film (prepared by a sol-gel method) of titanium dioxide on glass upon exposure for different periods of time with ultra bandgap light under anaerobic conditions (the redox indicator material is oxygen sensitive and so the indicator is reversible, the photocatalyst indicator operates via a reductive mechanism) ;

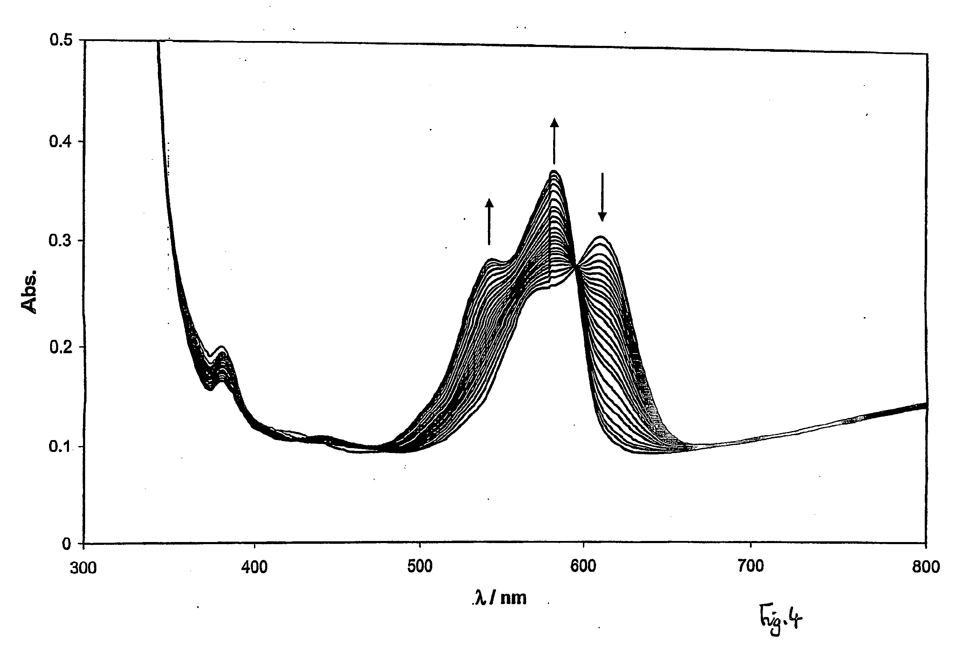

Figure 4 relates to the changes in UV-visible absorption spectrum upon ultra bandgap irradiation of an irreversible, oxygen insensitive indicator comprising the redox indicator material, resazurin, the sacrificial electron donor (SED), glycerol, in hydroxyethylcellulose coated onto a nanocrystalline film (prepared by a CVD method) of titanium dioxide on glass upon exposure for different periods of time with ultra bandgap light under aerobic conditions wherein the film is a photocatalyst indicator which operates via a reductive mechanism;

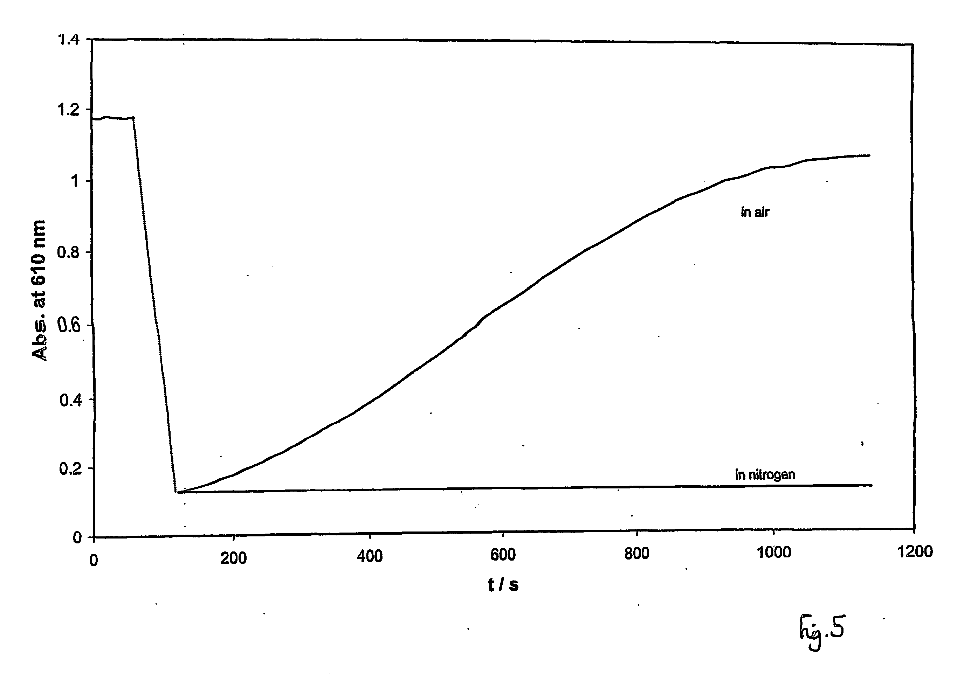

Figure 5 relates to the observed variation in the absorbance at 610 nm of methylene blue, and the sacrificial electron donor (SED) glycerol in hydroxyethylcellulose coated onto a nanocrystalline film (prepared by a sol-gel method) of titanium dioxide on glass upon exposure to near-UV light (ultra bandgap light) and then storage under an anaerobic and aerobic atmospheric condition wherein the indicator is a photocatalyst indicator which operates via a reversible reductive mechanism;

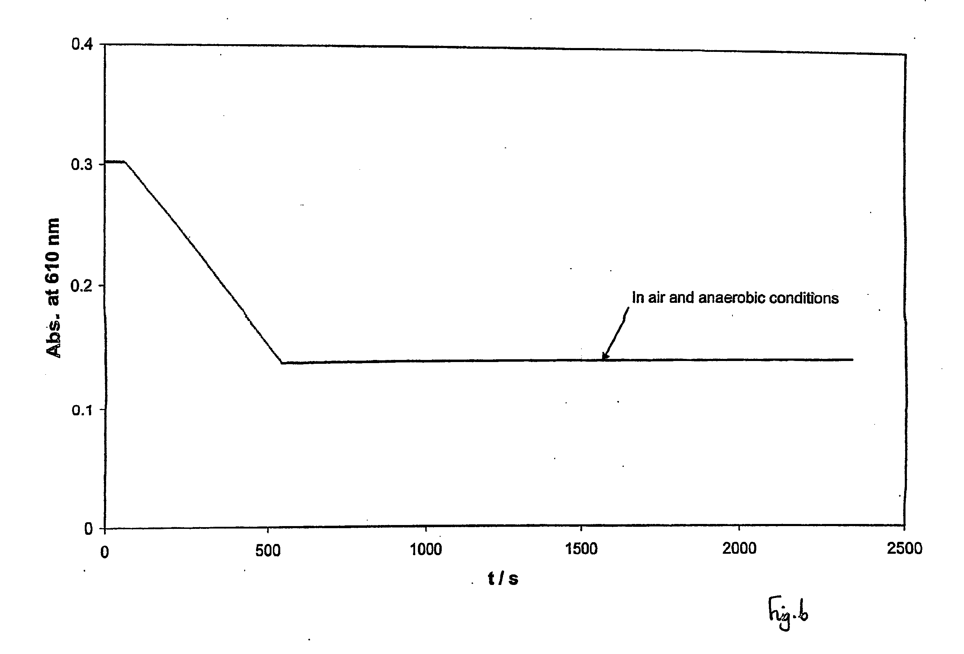

Figure 6 relates to the observed variation in the absorbance at 610 nm of resazurin and the sacrificial electron donor (SED) glycerol encapsulated in hydroxyethylcellulose and coated onto a nanocrystalline film (prepared by a CVD method) of titanium dioxide on glass upon exposure to ultra bandgap light and then storage under aerobic conditions wherein the film is a photocatalyst indicator which operates via an irreversible reductive mechanism;

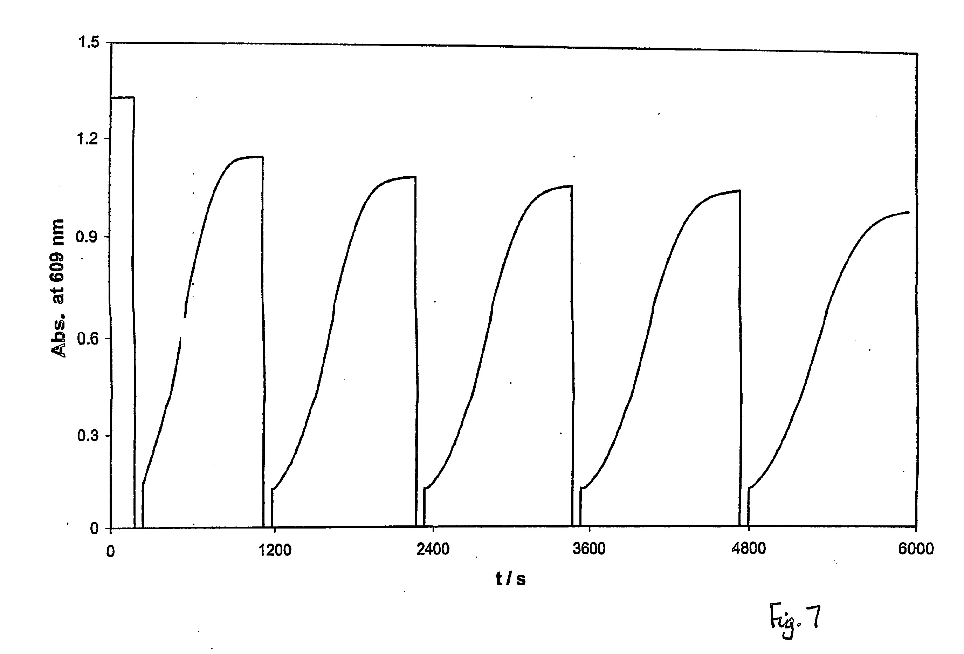

Figure 7 relates to the observed variation in the absorbance of 610 nm of methylene blue, and the sacrificial electron donor (SED) glycerol in hydroxyethylcellulose coated onto a nanocrystalline film of titania (prepared by a sol-gel method) on glass upon repeated exposure to a cycle of a 1 minute burst of UV light under aerobic conditions followed by an approximate 18 minute period of no UV light wherein the film is a photocatalyst indicator which operates via a reversible reductive mechanism;

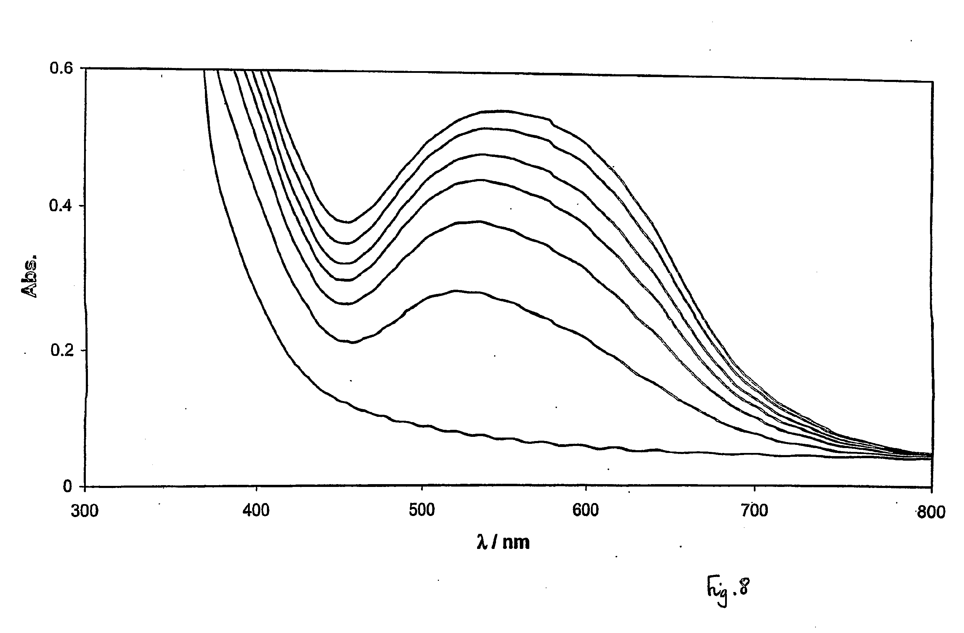

Figure 8 relates to the changes in UV-visible absorption spectrum upon ultra bandgap irradiation of an irreversible, oxygen insensitive indicator comprising the redox indicator material, Nitro Blue tetrazolium chloride monohydrate and the sacrificial electron donor (SED), glycerol, coated onto a nonocrystalline film (prepared by a sol-gel method) of titanium dioxide on glass upon exposure for different periods of time with ultra bandgap light under aerobic conditions wherein the film is a photocatalyst indicator which operates via a reductive mechanism and the colour change is irreversible;

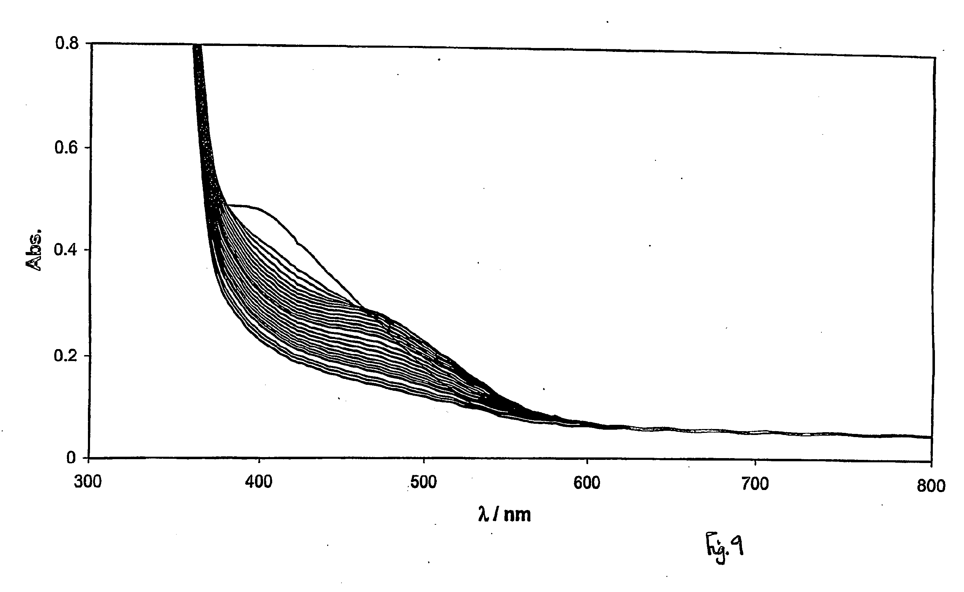

Figure 9 relates to the changes in UV-visible absorption spectrum upon ultra bandgap irradiation of an irreversible, oxygen insensitive indicator comprising the redox indicator material, methyl orange coated onto a nanocrystalline film (prepared by a sol-gel method) of titanium dioxide on glass upon exposure for different periods of time with ultra bandgap light under aerobic conditions wherein the film is a photocatalyst indicator which operates via an oxidative mechanism and the colour change is irreversible; and

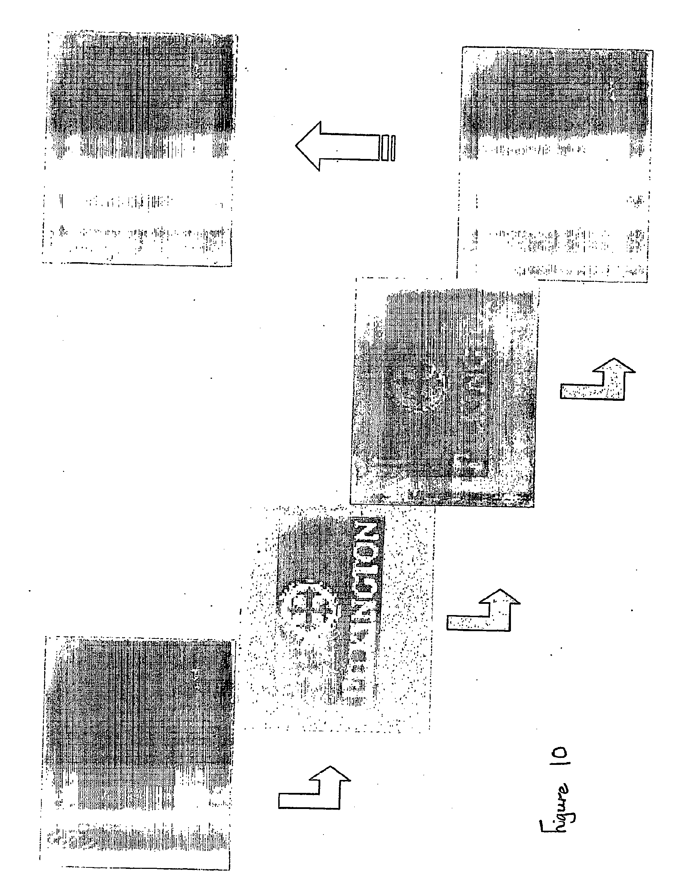

Figure 10 relates to an indicator according to the present invention in the form of the Pilkington (Registered Trade Mark) logo which is exposed to UV light.

### Detailed Description

Although the following discussion is limited to the detection of the semiconductor photocatalyst titanium dioxide, it should be realised that the discussion is applicable to many other semiconductor photocatalysts including most metal oxides and most metal chalcogenides.

The novel semiconductor photocatalyst indicator described herein utilises at least one redox-sensitive dye (e.g. a thiazine dyestuff, oxazine dyestuff, oxazone dyestuff, tetrazolium dyestuff, triarylmethane, azo dyestuff, trihalomethane dyestuff, azine dyestuff, indophenol dyestuff, indigo dyestuff, viologen and/or mixtures thereof). The redox-sensitive dye is chosen so that its reduced form has a different colour and/or fluorescence to its oxidised form and may, or may not, be oxidised to the latter by oxygen.

In the case of a photocatalyst film indicator that operates via a reductive mechanism, the photocatalyst indicator utilises a sacrificial electron donor (SED) which is a mild reducing such as triethanolamine (TEOA), the dye sodium salt of ethylene diammine tetra acetic acid (NaEDTA) or glycerol. A mild reducing agent is selected on the basis that (at the level employed in the photocatalyst indicator), it: (a) does not reduce chemically or photochemically the redox-sensitive dye at a significant rate under either aerobic or anaerobic condition, and (b) it does not reductively quench the electronically excited state of the redox-sensitive dye under either aerobic or anaerobic conditions. These conditions being satisfied, the combination of redox-sensitive material and mild reducing agent is stable and long-lived under ambient atmospheric and typical room light conditions. Usually, but not necessarily, a binder such as a polymer is also present in the photocatalyst indicator. The binder may be a polymeric material such as gelatin, hydroxyethylcellulose, polyvinyl alcohol, ethylcellulose, cellulose acetate, polypyrolidone, polyethylene oxide and polymethylmethacrylate. The hydroxyethylcellulose may be in a matrix form as shown below:

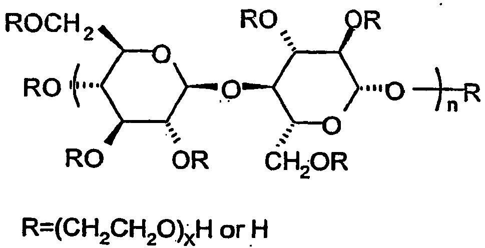

The indicator may also be made up in the form of an ink in which all of the ingredients i.e. redox-sensitive dye and sacrificial electron donor and the optional binder are dissolved up in a suitable solvent such as water, methanol, ethanol or mixtures thereof. The indicator ink is the preferred method by which the indicator may be cast onto the surface of a photoactive material, such as a coating of titanium dioxide on glass.

The role of the photcatalyst is to produce a colour change in the photocatalyst indicator by absorbing light of energy greater than or equal to that of the bandgap of the photocatalyst. Absorption of such light by the photocatalyst (in particle, film (micro or nanocrystalline) or single crystal form) leads to the creation of a photogenerated electron-hole pair. The photoctalyst material such as the semiconductor must photogenerate conductance band electrons that are sufficiently reducing so that they can reduce the redox-sensitive dye present and the valence band photogenerated holes are sufficiently oxidising so that they can oxidise the mild reducing agent present.

The net effect upon ultra bandgap irradiation of the combination of photocatalyst material (i.e. redox-sensitive dye/sacrificial electron donor) that goes to make the photocatalyst coated with a thin film of photocatalyst indicator is that the redox-sensitive dye is converted to its differently coloured, or fluorescent, reduced, oxygen sensitive or oxygen insensitive form.

For example, one type of photocatalyst indicator comprises the redox-sensitive dye methylene blue (which is blue in its original oxidised form) and the mild reducing agent triethanolamine. These two reaction ingredients can be dissolved in water containing a polymer binder such as hydroxyethylcellulose to create an ink which can be coated onto a photocatalyst material such as titanium dioxide. Upon ultra bandgap irradiation of semiconductor photocatalytic material the redox-sensitive dye, methylene blue (which is blue and oxygen insensitive) is reduced to leuco-methylene blue (which is colourless and oxygen sensitive), whilst the sacrificial electron donor (SED) is oxidised. As a consequence ultra bandgap irradiation of the photocatalyst material under test, in this case, titania, causes the indicator ink to change from its original blue colour to colourless. In this case, the reduced form of the redox indicator is sensitive to oxygen; thus once the ultra bandgap irradiation of the underlying photocatalyst material ceases, the reduced form of the dye is oxidised by oxygen in air back to its original form. However, this second step can be quite slow, so that the initial light-driven colour change that indicates the presence of an underlying photocatalyst is clearly visible. A schematic illustration of the overall process is shown in Figure 1(a).

Alternatively, the indicator comprises a redox-sensitive dye which when reduced is insensitive towards oxygen. An example of such an indicator comprises the redox-sensitive dye resazurin (which is blue in its original oxidised form) and the mild reducing agent glycerol. The resazurin and glycerol can be dissolved in water along with a suitable binding agent such as hydroxyethylcellulose to create an ink which may be cast, to create a thin indicating layer onto the semiconductor photocatalyst under test. Upon ultra bandgap irradiation of this combination of photocatalyst indicator and semiconductor photocatalyst, the redox-sensitive dye such as resazurin is reduced to resorufin which is red and the sacrificial electron donor, which may be glycerol, is oxsidised.

As the reduced form of resazurin which is resorufin, is oxygen insensitive and a different colour to the original oxidised form of the dye (i.e. Resazurin), which is also oxygen insensitive, the overall effect is to produce a colour change which is permanent. The dye (i.e. resazurin) is therefore not restored to its original colour upon exposure to oxygen. A schematic illustration of this overall process is shown in Figure 1(b).

In the case of a photocatalyst film indicator that operates via an oxidative mechanism the photocatalyst indicator utilises a sacrificial electron acceptor, which is a mild oxidising agent such as oxygen or hydrogen peroxide. A mild oxidising agent is selected on the basis that (at the level employed in the photocatalyst indicator), it: (a) does not oxidise chemically or photochemically the redox sensitive dye at a significant rate under either aerobic or anaerobic conditions, and (b) it does not oxidatively quench the electronically excited state of the redox sensitive dye under either aerobic or anaerobic conditions. These conditions being satisfied, the combination of redox sensitive material and mild oxidising agent is stable and long lived under ambient atmospheric and typical room light conditions. Usually, but not necessarily, a binder such as a polymer is also present in the photocatalyst indicator. The binder may be a polymeric material such as gelatin, hydroxyethylcellulose, polyvinyl alcohol, ethylcellulose, cellulose acetate, polypyrolidone polyethylene oxide and polymethyl methacrylate. The indicator may also be made up in the form of an ink in which all the above ingredients, i.e. redox sensitive dye and sacrificial electron acceptor and polymer, are dissolved up in a suitable solvent such as water, methanol, ethanol, or mixtures thereof. The indicator ink is the preferred method by which the indicator can be cast onto the surface of a semiconductor photoactive material, such as a coating of titanium dioxide on glass. The role of the photocatalyst is to produce a colour change in the photocatalyst indicator by absorbing light of energy greater than or equal to than that of the bandgap of the semiconductor.

Absorption of such light by the semiconductor material (in particle, film (micro or nanocrystalline) or single crystal form) leads to the creation of a photogenerated electron-hole pair. The semiconductor material must photogenerate valence band holes that are sufficiently oxidising that they can oxidise the redox sensitive dye present and the conductance band photogenerated holes are sufficiently reducing that they can reduce the mild oxidising agent present.

The net effect upon ultra band gap irradiation of the combination of photocatalyst material - (redox sensitive dye/sacrificial electron acceptor) that goes to make the photocatalyst coated with a thin film of photocatalyst indicator that works via an oxidative mechanism is that the redox sensitive dye is converted to its differently coloured, or fluorescent, usually oxygen insensitive form. For example, one type of photocatalyst indicator comprises the redox sensitive dye methyl orange (which is orange in its original oxidised form) and the mild oxidising agent oxygen. The two key reaction ingredients can be dissolved in water containing the polymer binder hydroxyethylcellulose to create an ink which can be coated onto a photocatalyst material such as titanium dioxide. Upon ultra-bandgap irradiation of semiconductor photocatalytic material the redox sensitive dye, methyl orange (which is orange and oxygen insensitive) is oxidised to a colourless and oxygen insensitive product, whilst the sacrificial electron acceptor is reduced. As a consequence ultra bandgap irradiation of the photocatalyst material under test, in this case, titania, causes the indicator ink to change from its original orange colour to colourless. As is usual with such systems in this case the oxidised form of the redox indicator is insensitive to oxygen, thus once the ultra bandgap irradiation of the underlying semiconductor material ceases the oxidised form of the dye is stable and the colour change is irreversible. The initial light-driven colour change, that indicates the presence of an underlying photocatalyst is clearly visible. A schematic illustration of the overall process is illustrated in Figure 2.

### Examples

The present invention is further illustrated by the following non-limiting examples. A shorthand summary of the composition of each example of a photocatalyst indicator will be referred to in the form (redox-sensitive dye/sacrificial electron donor or acceptor/polymer) semiconductor photocatalyst. Unless stated otherwise, in all the examples cited, the photocatalyst indicator composition (or ink) was cast onto a 25mm square of 2mm float glass covered with an 8 micron film of titania. The film of titania was prepared by a sol-gel method. The same colour changes are observed using titania films which are much thinner i.e. less than 1 micron, and prepared by a variety of different routes including chemical vapour deposition (CVD). In some Examples, CVD desposited titania was used instead of a sol-gel film. The photocatalyst indicator ink casting process involved placing 2-3 drops (ca 0.1m) of the ink on a 25mm square of the titania coated glass and spreading the solution evenly. For each indicator, the glass-titania substrate with its spread photocatalyst indicator composition was then spun at 6000rpm for 30 seconds using a spin coater. After this process, the final film was dry and ready to use. Such films may be stored under ambient atmospheric conditions, away from direct sunlight, for over 1 year with little sign of deterioration. The inks are also extremely stable and show little deterioration over a period of one year.

### Example 1: Methylene Blue (MB/TEOA/HEC) - Titania Film on

### Glass

This Example represents a typical photocatalyst indicator that operates via a reductive mechanism and is reversible when used in air.

A typical indicating ink was prepared as follows: 10mg of methylene blue (MB) and 0.4g of glycerol were mixed with 4g of a 2.5wt% aqueous solution of hydroxyethylcellulose (HEC) using a magnetic stirrer (30 minutes). The photocatalyst indicator ink was then cast onto a 25mm square piece of glass comprising a coating of nanocrystalline titania 4 microns thick.

Blank experiments carried out under anaerobic or aerobic conditions using a film identical to Example 1 except with no semiconductor present showed no change in colour upon exposure to ultra bandgap light (i.e. light of wavelength less than 420nm). This shows that the photocatalyst indicator does not change colour upon ultra bandgap irradiation unless a photocatalyst is present.

In contrast, when the ink is coated onto a piece a glass on which there is photocatalyst material present as in Example 1, near UV irradiation (i.e. ultra bandgap irradiation of the semiconductor) under anaerobic or aerobic conditions leads to the rapid loss of colour of the methylene blue as the redox-sensitive indicator is reduced to its colourless leuco form (i.e. leuco - methylene blue) by the glycerol present and is photosensitised by the underlying titanium dioxide semiconductor material.

The optical consequences of ultra bandgap irradiation of the semiconductor photocatalyst coated in the indicator ink, as described in Example 1 is shown in Figure 3. Figure 3 shows the observed change in the overall visible absorption spectrum of the titanium dioxide film and indicator ink with increasing time of irradiation with near UV light (100W black light bulb).

Figure 3 shows that with increasing irradiation time, the absorbance spectral profile of the methylene blue (i.e. MB) decreases with increasing irradiation time under aerobic conditions. A similar profile was recorded under anaerobic conditions (i.e. the colour change that indicates the presence of a photocatalyst is clear when the irradiation of the underlying photocatalyst is performed in the presence and absence of air) even though this example is one of a reversible indicator. A similar profile is recorded under aerobic conditions because, under the conditions found in the film, the oxidation of leuco - methylene blue is slow compared to the photo reduction of methylene blue.

Figure 3 shows that after 4 minutes irradiation using the 100W black light bulb, under the aerobic conditions Example 1 is completely decolourised, indicating the presence of the underlying titanium photocatalyst. Similar results were recorded under anaerobic conditions, thus the film photocatalyst indicator may be used under anaerobic and aerobic conditions, despite the sensitivity, albeit limited, of leuco-methylene blue to oxygen.

Although the reduced form of the redox-sensitive dye contained in the photocatalyst indicator is stable indefinitely under anaerobic conditions, in the case of methylene blue and many other redox indicators, upon exposure to air the reduced form of the redox-sensitive dye is relatively slowly (i.e. 100's seconds) restored to its original oxidised form. In the case of methylene blue, this involves a colour change from colourless, back to blue upon exposure to air. However, the rate of this process is sufficiently slow that the original ultra bandgap light induced colour change is clear when irradiation of the indicator is carried out under aerobic or anaerobic conditions.

Photocatalyst indicators containing a redox-sensitive indicator dye that is oxygen sensitive, may be used over and over again. Figure 7 illustrates the observed variation in the absorbance at 610nm of Example 1 in a repeated cycle of irradiation with near UV light followed by a long period of no UV irradiation under aerobic conditions. From these results it may be seen that the catalyst indicator can be cycled many times.

A series of example photocatalyst indicators were prepared using, unless stated otherwise, an identical procedure to that reported above for Example 1, with only the nature, but not the amount, of the redox sensitive dye altered. Each of these films was tested for colour change response upon light activation in an aerobic and anaerobic atmosphere and the observed initial colour change upon ultra bandgap irradiation of the titania photocatalyst was noted. In Examples 1-4, but not Examples 5-8, upon cessation of the ultra-bandgap irradiation the reduced form of these redox sensitive dyes were found to be air sensitive and therefore the original colour of the dye was slowly restored as oxygen oxidised the reduced form of the redox sensitive dye. The results of this work are summarised in Table 1.

**Table 1 - Photocatalyst indicators using different redox-sensitive dyes**

| **Example** | **Oxygen Indicator** | **Colour Changes In N₂** | **Reversible upon Exposure to Air?** | **Colour change in Air** |
|---|---|---|---|---|
| 1 | MB/TEOA/HEC on TiO₂ | B → W | Yes | W → B |
| 2 | DCIP/TEOA/HEC on TiO₂ | B → W | Yes | W → B |
| 3 | RR/TEOA/HEC on TiO₂ | V → W | Yes | W → V |
| 4 | BV/EDTA/HEC on TiO₂ | W → P | Yes | P → W |
| 5 | RZ/glycerol/HEC on TiO₂* | B→R→W | Initial colour change B→R is irreversible | B → R |
| 6 | NBT/glycerol/HEC on TiO₂ | Pale yellow → Bk | No | Pale yellow → Bk |
| 7 | MO/glycerol on TiO₂ | O → W | No | O → W |
| 8 | MO on TiO₂ | O → W | No | O → W |

**Photocatalyst indicator:** MB = methylene blue; DCIP = dichloroindophenol; RR = Resorufin; IC = indigo carmine; BV = benzyl viologen; RZ = resazurin; NBT = Nitro Blue tetrazolium chloride; MO = methyl orange; TEOA = triethanol amine; TiO₂ = titanium (IV) oxide (4 micron sol gel film) and HEC = hydroxyethyl cellulose. **Colour change:** B = blue, Bk = Black, 0 = orange, W = white (i.e. colourless), V = violet, G* = green and luminescent and P = purple. TiO₂* used was a CVD titania film.

### Example 5: Resazurin (RZ)/glycerol/hydroyethylcellulose) - titania film on glass

This Example represents a typical photocatalyst indicator that operates via a reductive, unlike previous Examples 1-4, mechanism and is irreversible.

A typical film was prepared as follows: 4mg of resazurin (RZ) and 0.3g of glycerol were mixed with 3g of a 1.5wt% aqueous solution of hydroxyethylcellulose (HEC) using a magnetic stirrer (30 minutes). This photocatalyst indicator ink was then cast onto a 25mm square 4mm thick float glass covered with a CVD coating (25nm thick) of titania.

Blank experiments carried out under anaerobic and aerobic conditions using a film identical to Example 1 except with no semiconductor present showed no change in colour upon exposure to ultra bandgap light, i.e. light of wavelength less than 420nm. This latter experiment shows that the photocatalyst indicator does not change colour if there is no underlying photocatalyst present. In contrast, when a photocatalyst semiconductor material is present, such as titanium dioxide, as in Example 5 (see Table 1), near UV irradiation under anaerobic or aerobic conditions leads to the rapid change in colour as the resazurin (RZ) is reduced to resorufin (RR) by the glycerol present and is photosensitised by the titania semiconductor material.

The optical consequences of the near UV irradiation of the photoctalyst indicator film on a titania photocatalyst for Example 5 are illustrated in Figure 4, which shows the observed change in its UV/visible absorption spectrum with increasing time of irradiation with near UV light (100W black light bulb). As the results illustrated in Figure 4 show, with increasing irradiation time the absorption spectrum profile of the original resazurin changes with increasing irradiation time under aerobic conditions. From the results in Figure 4 it appears that after 3 minutes irradiation, using the 100W black light bulb under aerobic conditions, Example 5 is completely changed in colour, turning blue to red, indicating its conversion to Resorufin.

The reduced form of the redox sensitive dye contained in the photocatalyst indicator, exemplified by Example 5, i.e. RR, is stable indefinitely under aerobic and anaerobic conditions. The colour change is thus permanent and irreversible. As a result the photocatalyst indicator can only be used once, if a photocatalyst is present. Resazurin and resorufin are two closely related hetrocyclic compounds that contain the oxazone chromophore. Resorufin is a reduced form of resazurin. Neither dye is considered to have practical dye applications due to their great sensitivity to irreversible reduction from resazurin to resorufin. Prolonged irradiation of a semiconductor photocatalyst, such as titanium dioxide, will reduce resazurin irreversibly to resorufin and then with prolonged UV irradiation subsequently to leuco resorufin. The latter is colourless (whereas resorufin is red) and oxygen sensitive, i.e. it is rapidly reoxidised from its colourless leuco reduced form to its red oxidised form, i.e. resorufin form by oxygen. The above is an example of an irreversible photocatalyst indicator that operates via a reduction mechanism. Typical results illustrating the spectral changes that this film undergoes upon irradiation in the presence of an underlying photocatalyst are illustrated in Figure 4. Figure 6 illustrates results that highlight the irreversible nature of the colour change provided by this indicator film.

Another example of an irreversible photocatalyst indicator that operates via a reduction mechanism is the NBT/glycerol/HEC indicator, i.e. Example 6 in Table 1. The indicator was prepared as described for Example 5, the RZ/glycerol/HEC indicator. Unlike the latter indicator upon irradiation of the NBT/glycerol/HEC indicator colour change is from pale yellow to black, indicative of the formation of the formazan dye which (unlike its RR counterpart) is not easily reduced by further irradiation. Typical results recorded for this film are illustrated in Figure 8. Azo dyes such as methyl orange can be used instead of NBT to create similar irreversible photocatalyst indicators that operate via a reduction mechanism, see Example 7, provided a sacrificial electron donor, such as glycerol, is present.

### Example 8: Methyl Orange - Titania Film on Glass

A typical photocatalyst indicator that operates via an o-xidative mechanism and is irreversible.

An example of an irreversible, photocatalyst indicator that operates via an oxidative mechanism is the MO indicator, i.e. Example 8 in Table 1. Such indicators can be prepared by simply making an aqueous solution of the dye and then coating the dye onto the photocatalyst film under test. Air is usually used as the sacrificial electron acceptor. Irradiation of the film only produces a colour change (orange to colourless) when there is an underlying photocatalyst present. Typical results for this film are illustrated in Figure 9.

The nature of the semiconductor (but not its concentration in the indicator formulation) used in oxygen indicator was also varied from that used in Example 1 and characterised as described above. In this work all other experimental components and additions were used in the preparation of Example 1. The results of this work are summarised in Table 2 and show that this photocatalyst indicator technology works for photocatalysts other than titania.

**Table 2 - Photocatalst indicators using different semiconductors**

| **Example** | **Oxygen Indicator** | **Colour Change In N₂** | **Reversible upon Exposure to Air?** | **Colour change In Air** |
|---|---|---|---|---|
| 1 | MB/Glycerol/HEC on TiO₂ | B → W | Yes | W → B |
| 9 | MB/Glycerol/HEC on ZnO | B → W | Yes | W → B |

The nature of the polymer binder used in the photocatalyst indicator was also varied from that used in Example 1 and characterised as described above. The results of this works are summarised in Table 3 and show that the polymer binder can be varied without compromising the efficacy of the photocatalyst indicator.

**Table 3 - Photocatalyst Indicators Using Different Polymers**

| **Example** | **Oxygen Indicator** | **Colour Change In N₂** | **Reversible upon Exposure to Air?** | **Colour change in Air** |
|---|---|---|---|---|
| 1 | MB/TEOA/HEC on TiO₂ | B → W | Yes | W → B |
| 10 | MB/TEOA/PMMA on TiO₂ | B → W | Yes | W → B |
| 11 | MB/TEOA/PVP on TiO₂ | B → W | Yes | W → B |

| | | | | |
|---|---|---|---|---|
| PMMA = polymethylmethacrylate, PVP = polyvinylpyrolidone | | | | |

The nature of the sacrificial electron donor, but not its concentration in the photocatalsyt indicator formulation was also varied from that used in Example 1 and characterised as described above. In this work all other experimental components and conditions were used in the preparation of Example 1. The results of this work are summarised in Table 4 and show that the SED can be varied without compromising the efficacy of the photocatalyst indicator.

**Table 4: Photocatalyst oxygen indicators using different sacrificial electron donors**

| **Example** | **Oxygen Indicator** | **Colour Change In N₂** | **Reversible Exposure to Air** | **Colour change in Air** |
|---|---|---|---|---|
| 1 | MB/TEOA/HEC on TiO₂ | B → W | Yes | W → B |
| 4 | BV/EDTA/HEC on TiO₂ | W → P | Yes | P → W |
| 12 | MB/TEOA/HEC On TiO₂ | B → W | Yes | W → B |

### Example 13

Figure 10 relates to a piece of glass coated with an 8-micron film of titania prepared with by a sol-gel method. The titania film is coated with a typical indicating ink, as described in Example 1, comprising methylene blue (as the redox indicator), glycerol (as the sacrificial electron donor) and hydroxyl ethyl cellulose (as the polymer binder). Initially (before irradiation with UV light) the indicator ink coated titania film is blue as all the methylene blue redox indicator is in its oxidised form. Upon irradiation (through a mask with the Pilkington Glass (Registered Trade Mark) logo and name) regions of the film that are exposed to UV light turn colourless (as the photocatalyst indicator ink is rendered to colourless) and the areas that are not exposed to UV light remain blue. Thus, the first step, involving UV irradiation through the mask produces the Pilkington Glass (Registered Trade Mark) logo and name, where the blue areas are areas which have not been exposed to UV light and the clear areas are areas which have been exposed to UV light. However, since this indicator ink is an example of a reversible photocatalyst indicator, after UV irradiation the colourless form of the redox indicator is slowly oxidized by oxygen in air back to its original blue form and thus, over a period of time, the Pilkington Glass (Registered Trade Mark) logo slowly disappears until finally the indicator coated titania glass has reverted back to is original colour. This process takes about 10-20 minutes and upon completion the final indicator ink coated titania film is identical to the original (ie. identical to its pre-UV irradiated form).

## Claims

1. A product obtainable by the steps of:
dissolving at least one redox sensitive material, which displays different physical properties in the oxidised and reduced forms and is capable of becoming irreversibly reduced and changing colour and/or luminescence light intenstity and at least one sacrificial electron donor in a solvent to form an ink;
applying the ink onto a photocatalyst semiconductor material;
and drying the ink to form a thin dry surface on the photocatalyst semiconductor material

2. The product according to claim 1, wherein the photocatalyst material can be electronically excited by exposure to light of energy greater than or equal to the bandgap energy of the photocatalyst.

3. The product according to claim 2, wherein the electronically excited photocatalyst material is able to oxidise the electron donor present in the indicator.

4. The product according to claim 1, wherein the ink forms a highly coloured stain, or label, on the surface of the photocatalytic material.

5. The product according to claim 1, wherein the redox sensitive material is a dye such as: a thiazine dyestuff, oxazene dyestuff, oxazone dyestuff, tetrazolium dyestuff, triarlymethane dyestuff, azine dyestuff, azo dyestuff, trihalomethane dyestuff, indophenol dyestuff and indigo dyestuff, viologen and/or mixtures thereof.

6. The product according to claim 1, wherein the electron donor is a mild reducing agent and is selected from any of the following: an amine (e.g. NaEDTA or TEOA), a reducing saccharide (such as glucose or fructose), an anti-oxidant (such as ascorbic and citric acid), an easily oxidisable material such as glycerol and/or mixtures thereof.

7. The product according to claim 1, wherein the photocatalyst material is selected from any of the following: an oxide of titanium, including titanium (IV) oxide; TiO₂ and strontium titanate i.e. SrTiO₃, an oxide of tin, including tin (IV) oxide; and SnO₂), an oxide of tungsten, including tungsten (VI) oxide; and WO₃, an oxide of zinc, including zinc (II) oxide; and ZnO and mixtures thereof; a metal chalcogenide including cadmium oxide, cadmium sulfide, cadmium selanide, cadmium telluride, chalcogenides of zinc and mercury; and a doped version of a metal oxide such as, nitrogen doped titanium (IV) oxide.

8. The product according to claim 1, coated on an inert substrate such as glass, ceramic, metal or inert polymeric material such as silica coated silicon with a thickness of about 15nm.

9. The product according to claim 1, wherein the indicator further comprises a binder which binds the components of the photocatalyst indicator together such as: a polymeric material such an gelatin, hydroxyethyl, cellulose (HEC), polyvinyl alcohol (PVA), ethyl cellulose (EC), cellulose acetate (CEA), polypyrolidone (PVP), polyethylene oxide and polymethylmethacrylate (PMMA).

10. A method of detecting a photocatalyst material coated on a substrate comprising the steps of: coating an indicator on the substrate, the indicator comprising at least one redox-sensitive material which displays different physical properties in the oxidised and reduced forms, and
at least one sacrificial electron donor;
wherein the at least one redox sensitive material and the at least one electron donor are substantially in contact with one another;
irradiating the substrate with light of greater than or equal to the energy necessary to electronically excite any photocatalyst material which may be present on the substrate, such that the indicator becomes irreversibly reduced and changes colour and/or luminescent light intensity, when in contact with the photocatalyst material; and detecting any charge in colour and/or luminescent light intensity.

11. A method according to claim 10, wherein the substrate is irradiated with light of 300nm - 420nm in order to detect titanium dioxide as the photocatalyst.

12. A method according to claim 10, wherein when the photocatalyst material is only coated to one side of glass the indicator is applied as writing to facilitate the determination of which side of the glass the photocatalyst is coated on.

13. A method according to claim 10, wherein the method is conducted so as to ensure that photocatalyst material adhered to a glass surface is still present and active many years after the glass has been installed.

## Patentansprüche

1. Produkt erhältlich durch die Schritte des:
Lösens mindestens eines redoxempfindlichen Materials, das verschiedene physikalische Eigenschaften in der oxidierten und reduzierten Form aufweist und dazu fähig ist, irreversibel reduziert zu werden und die Farbe und/oder Lumineszenzlichtintensität zu ändern und mindestens eines opfernden Elektronendonators in einem Lösungsmittel zum Bilden einer Tinte;
Aufbringens der Tinte auf ein Photokatalysator-Halbleitermaterial;
und Trocknens der Tinte unter Bildung einer dünnen trockenen Fläche auf dem Photokatalysator-Halbleitermaterial.

2. Produkt nach Anspruch 1, wobei das Photokatalysatormaterial durch Aussetzen Licht einer Energie von mehr als oder gleich der Bandlückenenergie des Photokatalysators gegenüber elektronisch angeregt werden kann.

3. Produkt nach Anspruch 2, wobei das elektronisch angeregte Photokatalysatormaterial dazu fähig ist, den im Indikator vorliegenden Elektronendonator zu oxidieren.

4. Produkt nach Anspruch 1, wobei die Tinte einen stark gefärbten Fleck oder ein stark gefärbtes Label auf der Oberfläche des photokatalytischen Materials bildet.

5. Produkt nach Anspruch 1, wobei das redoxempfindliche Material ein Farbstoff ist wie: ein Thiazinfarbstoff, Oxazenfarbstoff, Oxazonfarbstoff, Tetrazoliumfarbstoff, Triarylmethanfarbstoff, Azinfarbstoff, Azofarbstoff, Trihalomethanfarbstoff, Indophenolfarbstoff und Indigofarbstoff, Viologen und/oder Mischungen davon.

6. Produkt nach Anspruch 1, wobei der Elektronendonator ein mildes Reduktionsmittel und von einem der Folgenden ausgewählt wird: einem Amin (z.B. NaEDTA oder TEOA), einem reduzierenden Saccharid (wie Glukose oder Fructose), einem Antioxidationsmittel (wie Ascorbin- und Zitronensäure), einem leicht oxidierbaren Material wie Glycerin und/oder Mischungen davon.

7. Produkt nach Anspruch 1, wobei das Photokatalysatormaterial aus einem der Folgenden ausgewählt wird: einem Oxid von Titan, einschließlich Titan(IV)oxid; TiO₂ und Strontiumtitanat, d.h. SrTiO₃, einem Oxid von Zinn, einschließlich Zinn(IV)oxid; und SnO₂, einem Oxid von Wolfram, einschließlich Wolfram(IV)oxid; und WO₃, einem Oxid von Zink, einschließlich Zink(II)oxid; und ZnO und Mischungen davon; einem Metallchalcogenid einschließlich Cadmiumoxid, Cadmiumsulfid, Cadmiumselenid, Cadmiumtellurid, Chalcogeniden von Zink und Quecksilber; und einer dotierten Version eines Metalloxids wie mit Stickstoff dotiertes Titan(IV)oxid.

8. Produkt nach Anspruch 1, das schichtförmig auf ein inertes Substrat wie Glas, Keramikmaterial, Metall oder inertes polymeres Material aufgebracht ist, wie mit Siliciumdioxid beschichtetes Silicium mit einer Dicke von etwa 15 nm.

9. Produkt nach Anspruch 1, wobei der Indikator des Weiteren ein Bindemittel umfasst, das die Komponenten des Photokatalysatorindikators zusammenbindet, wie beispielsweise: ein polymeres Material wie Gelatine, Hydroxyethyl, Cellulose (HEC), Polyvinylalkohol (PVA), Ethylcellulose (EC), Celluloseacetat (CEA), Polypyrrolidon (PVP), Polyethylenoxid und Polymethylmethacrylat (PMMA).

10. Verfahren zum Erfassen eines Photokatalysatormaterials, das schichtförmig auf ein Substrat aufgebracht ist, umfassend die Schritte des: schichtförmigen Aufbringens eines Indikators auf das Substrat, wobei der Indikator mindestens ein redoxempfindliches Material umfasst, das verschieden physikalische Eigenschaften in oxidierten und reduzierten Formen aufweist; und
mindestens einen opfernden Elektronendonator;
wobei das mindestens eine redoxempfindliche Material und der mindestens eine Elektronendonator sich im Wesentlichen in Kontakt miteinander befinden;
Bestrahlens des Substrats mit Licht von mehr als oder gleich der Energie, die notwendig ist, um irgendein Photokatalysatormaterial, das auf dem Substrat vorliegen kann, elektronisch anzuregen derart, dass der Indikator irreversibel reduziert wird und die Farbe und/oder Lumineszenzlichtintensität ändert, wenn er sich in Kontakt mit dem Photokatalysatormaterial befindet; und Erfassens irgendeiner Änderung der Farbe und/oder Lumineszenzlichtintensität.

11. Verfahren nach Anspruch 10, wobei das Substrat mit Licht von 300 nm - 420 nm bestrahlt wird, um Titandioxid als Photokatalysator zu erfassen.

12. Verfahren nach Anspruch 10, wobei, wenn das Photokatalysatormaterial nur auf eine Seite von Glas schichtförmig aufgebracht wird, der Indikator als Schrift aufgebracht wird, um das Bestimmen, auf welcher Seite des Glases der Photokatalysator schichtförmig aufgebracht worden ist, zu erleichtern.

13. Verfahren nach Anspruch 10, wobei das Verfahren durchgeführt wird, um sicherzustellen, dass das Photokatalysatormaterial, das an der Glasoberfläche befestigt worden ist, viele Jahre, nachdem das Glas installiert worden ist, noch vorliegt und aktiv ist.

## Revendications

1. Produit pouvant être obtenu par les étapes de:
dissolution d'au moins un matériau à sensibilité rédox, qui affiche différentes propriétés physiques sous les formes oxydée et réduite et qui est capable de devenir réduit de manière irréversible et de changer de couleur et/ou d'intensité de lumière luminescente et au moins un donneur d'électrons sacrificiel dans un solvant pour former une encre,
application de l'encre sur un matériau semi-conducteur photocatalyseur;
et séchage de l'encre pour former une surface fine sèche sur le matériau semi-conducteur photocatalyseur.

2. Produit selon la revendication 1, le matériau photocatalyseur pouvant être électroniquement excité par exposition à la lumière d'une énergie supérieure ou égale à la largeur de bande interdite du photocatalyseur.

3. Produit selon la revendication 2, le matériau photocatalyseur électroniquement excité étant capable d'oxyder le donneur d'électrons présent dans l'indicateur.

4. Produit selon la revendication 1, l'encre formant une tache, ou une étiquette, fortement colorée sur la surface du matériau photocatalytique.

5. Produit selon la revendication 1, le matériau à sensibilité rédox étant un colorant tel que: une matière colorante de type thiazine, une matière colorante de type oxazène, une matière colorante de type oxazone, une matière colorante de type tétrazolium, une matière colorante de type triarylméthane, une matière colorante de type azine, une matière colorante de type azoïque, une matière colorante de type trihalogénométhane, une matière colorante de type indophénol et une matière colorante de type indigo, un viologène et/ou leurs mélanges.

6. Produit selon la revendication 1, le donneur d'électrons étant un agent de réduction modérée et étant choisi parmi n'importe lequel des suivants: une amine (par exemple NaEDTA ou TEOA), un saccharide réducteur (tel que le glucose ou le fructose), un antioxydant (tel que l'acide ascorbique et l'acide citrique), un matériau facilement oxydable tel que le glycérol et/ou leurs mélanges.

7. Produit selon la revendication 1, le matériau photocatalyseur étant choisi parmi n'importe lequel des suivants: un oxyde de titane, incluant l'oxyde de titane (IV); TiO₂ et le titanate de strontium c'est-à-dire SrTiO₃, un oxyde d'étain, incluant l'oxyde d'étain (IV); et SnO₂, un oxyde de tungstène, incluant l'oxyde de tungstène (VI); et WO₃, un oxyde de zinc, incluant l'oxyde de zinc (II); et ZnO et leurs mélanges, un chalcogénure métallique incluant l'oxyde de cadmium, le sulfure de cadmium, le séléniure de cadmium, le tellurure de cadmium, les chalcogénures de zinc et de mercure; et une version dopée d'un oxyde métallique tel que l'oxyde de titane (IV) dopé à l'azote.

8. Produit selon la revendication 1, revêtu sur un substrat inerte tel que du verre, de la céramique, du métal ou un matériau polymère inerte tel que le silicium revêtu de silice avec une épaisseur d'environ 15 nm.

9. Produit selon la revendication 1, l'indicateur comprenant en outre un liant qui lie les composants de l'indicateur photocatalyseur ensemble tel que: un matériau polymère tel que la gélatine, l'hydroxyéthyl cellulose (HEC), le poly(alcool de vinyle) (PVA), l'éthyl cellulose (EC), l'acétate de cellulose (CEA), la polypyrrolidone (PVP), le poly(oxyde d'éthylène) et le poly(méthacrylate de méthyle) (PMMA).

10. Procédé de détection d'un matériau photocatalyseur revêtu sur un substrat comprenant les étapes de: revêtement d'un indicateur sur le substrat, l'indicateur comprenant au moins un matériau à sensibilité rédox qui affiche différentes propriétés physiques sous les formes oxydée et réduite; et
au moins un donneur d'électrons sacrificiel;
dans lequel le au moins un matériau à sensibilité rédox et le au moins un donneur d'électrons sont substantiellement en contact l'un avec l'autre;
irradiation du substrat avec de la lumière supérieure ou égale à l'énergie nécessaire pour exciter de manière électronique n'importe quel matériau photocatalyseur qui peut être présent sur le substrat, de sorte que l'indicateur devient irréversiblement réduit et change de couleur et/ou d'intensité de lumière luminescente, lorsqu'il se trouve en contact avec le matériau photocatalyseur; et la détection de n'importe quel changement de couleur et/ou d'intensité de lumière luminescente.

11. Procédé selon la revendication 10, le substrat étant irradié avec de la lumière de 300 nm à 420 nm afin de détecter le dioxyde de titane comme photocatalyseur.

12. Procédé selon la revendication 10, dans lequel lorsque le matériau photocatalyseur est uniquement revêtu sur une face du verre l'indicateur est appliqué sous la forme d'écriture pour faciliter la détermination de la face du verre sur laquelle le photocatalyseur est revêtu.

13. Procédé selon la revendication 10, le procédé étant conduit afin de garantir que le matériau photocatalyseur qui a adhéré à la surface du verre est encore présent et actif de nombreuses années après que le verre ait été installé.
